# EUROPEAN PATENT APPLICATION

(11) **EP 4 328 833 A1**
(43) Date of publication of application: **28.02.2024**
(21) Application number: 22791794.5
(22) Date of filing: 21.04.2022
(51) Int. Cl.: G06Q 20/06

(54) **INFORMATION PROCESSING DEVICE AND INFORMATION PROCESSING METHOD**

(30) Priority: 22.04.2021 JP 2021072732; 24.11.2021 JP 2021189842
(71) Applicant: Decurret DCP Inc., Tokyo, 102-0071 (JP)
(72) Inventor: SHIMIZU, Kenichi, Tokyo 102-0071 (JP); TSUJI, Kazuyuki, Tokyo 102-0071 (JP)
(74) Representative: Pitchford, James Edward
(86) International application number: PCT/JP2022/018453
(87) International publication number: WO 2022/225023

(57) **Abstract**

An information processing apparatus that is managed by a management business operator that manages a token, comprises: accepting means for accepting a payment instruction to transfer a coin associated with a cash currency, from a first user to a second user; and transmitting means for transmitting a transfer instruction to transfer a token associated with the coin, to an electronic currency management system in accordance with the payment instruction accepted by the accepting means, wherein the electronic currency management system includes: a coin blockchain network for managing the coin, a token blockchain network for managing a token, and transfer means for transferring the coin associated with the token within the coin blockchain network in accordance with transfer of the token within the token blockchain network.

## Description

### TECHNICAL FIELD

The present invention relates to an information processing apparatus and an information processing method.

### BACKGROUND ART

Heretofore, electronic settlement systems for a plurality of electronic currencies, virtual currencies, and the like have been run by a plurality of business operators. Patent Document 1 discloses a system that enables transfer (transaction) of a virtual currency, for example.

### CITATION LIST

### PATENT LITERATURE

PTL1: Japanese Patent No. 6521421

### SUMMARY OF INVENTION

### TECHNICAL PROBLEM

The present invention has been made in view of the aforementioned problem, and aims to provide a technique that enables a business operator that desires to manage an electronic currency to easily manage an electronic currency.

### SOLUTION TO PROBLEM

The present invention, for example an information processing apparatus that is managed by a management business operator that manages a token, comprises:
accepting means for accepting a payment instruction to transfer a coin associated with a cash currency, from a first user to a second user; and
transmitting means for transmitting a transfer instruction to transfer a token associated with the coin, to an electronic currency management system in accordance with the payment instruction accepted by the accepting means,
wherein the electronic currency management system includes:
   a coin blockchain network for managing the coin,
   a token blockchain network for managing a token, and
   transfer means for transferring the coin associated with the token within the coin blockchain network in accordance with transfer of the token within the token blockchain network.

### ADVANTAGEOUS EFFECTS OF INVENTION

According to the present invention, it is possible to provide a technique that enables a business operator that desires to manage an electronic currency to easily manage an electronic currency.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an electronic currency management system according to an embodiment of the present invention.
FIG. 2 is a diagram showing a hardware configuration of each of the issuing apparatuses, the management business operator apparatuses, the user apparatuses, and the relay apparatuses in FIG. 1.
FIG. 3 is a diagram showing processing for issuing a token.
FIG. 4 is a conceptual diagram of a double-layer-structure electronic currency.
FIG. 5 is a diagram showing an example of transfer of a value between additional area networks.
FIG. 6 is a diagram showing an example of transfer of a value between additional area networks.
FIG. 7 is a diagram showing application examples of additional area networks.
FIG. 8 is a diagram showing an example of an interbank settlement.
FIG. 9 is a diagram showing an electronic currency management system.
FIG. 10A is a diagram showing processing for registering an issuing apparatus.
FIG. 10B is a diagram showing processing for registering a management business operator apparatus.
FIG. 10C is a diagram showing processing for registering a user apparatus.
FIG. 11A is a diagram showing depositing processing.
FIG. 11B is a diagram showing depositing processing.
FIG. 12 is a diagram showing processing for issuing coins.
FIG. 13 is a diagram showing the electronic currency management system after coins have been issued.
FIG. 14 is a diagram showing processing for registering a token.
FIG. 15 is a diagram showing processing for issuing a token.
FIG. 16 is a diagram showing the electronic currency management system after a token has been issued.
FIG. 17 is a diagram showing processing for purchasing a token.
FIG. 18 is a diagram showing the electronic currency management system after a token has been purchased.
FIG. 19 is a diagram showing an example of transfer of a token.
FIG. 20 is a diagram showing an example of transfer of a token.
FIG. 21 is a diagram showing a hardware configuration of the management server in FIG. 13.
FIG. 22 is a diagram showing an example of payment processing in an additional area.
FIG. 23 is a diagram showing an example of payment processing in an additional area.
FIG. 24 is a diagram showing an example of remittance processing in a common area.
FIG. 25 is a diagram showing an example of payment processing in an additional area.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

An electronic currency management system according to the present embodiment will be described below. An electronic currency management system 1 according to the present embodiment includes a common area network 10, issuing apparatuses 11A, 11B, and 11C (hereinafter, may be referred to as "issuing apparatuses 11 without distinguishing therebetween), relay apparatuses 21A, 21B, and 21C (hereinafter, may be referred to as "relay apparatuses 21" without distinguishing therebetween), additional area networks 30A, 30B, and 30C (hereinafter, may be referred to as "additional area networks 30" without distinguishing therebetween), management business operator apparatuses 31A, 31B, and 31C (hereinafter, may be referred to as "management business operator apparatuses 31" without distinguishing therebetween), and user apparatuses 41A, 41B, and 41C (hereinafter, may be referred to as "user apparatuses 41" without distinguishing therebetween) and user apparatuses 42A, 42B, and 42C (hereinafter, may be referred to as "user apparatuses 42" without distinguishing therebetween).

The common area network 10 is a distributed ledger network such as a blockchain network, and is constituted by nodes that manage the distributed ledger system, and that include the issuing apparatuses 11. The common area network 10 is used to execute operations such as transfer of electronic currencies (coins) 101 to 104 associated with currencies that are managed by the issuing apparatuses 11.

The issuing apparatuses 11 are apparatuses used by corporations that have a license for issuing an electronic currency, such as banks.

The additional area networks 30 are distributed ledger networks such as blockchain networks, and are each constituted by nodes that manage the distributed ledger system, and that include the management business operator apparatus 31 and the user apparatuses 41 and 42. The additional area networks 30 are used to provide operations such as transfer of a token managed by the management business operator apparatuses 31. In the present embodiment, operations of coins or a token include issuance, transfer, redemption, and exchange thereof. The additional area networks 30 are created for respective usage cases in accordance with business needs of corporations and the like.

The relay apparatuses 21 monitor the common area network 10 and the additional area networks 30, and perform operations of coins on the common area network 10 in accordance with operations of a token performed in the additional area networks 30. Also, the relay apparatuses 21 perform operations of tokens in the additional area networks 30 in accordance with operations of coins performed in the common area network 10. The management business operator apparatuses 31 are apparatuses of business operators that manage tokens in the additional area networks 30. The user apparatuses 41 and 42 are apparatuses of users that receive services provided using tokens on the additional areas.

The issuing apparatus 11A that is a bank, for example, withdraws one billion yen from existing bank savings in a bank account of the management business operator 31A that is a customer who desires to issue one billion yen of electronic currency, based on a request from the customer, and issues one billion yen of white coins 101 in a state where an additional area on which the white coins 101 are to be used has not been specified.

After this, the management business operator allocates two hundred million yen of white coins 101 out of the one billion yen of white coins 101 issued using an application provided by the common area network 10, to coins 102 associated with an additional area, and gives, to the additional area network 30A, an issuance instruction to issue a token (for example, an electric power token) equivalent to the coins 102. From this point on, the two hundred million yen out of the one billion yen of white coins can be used only on the additional area network 30A (for example, an additional area for electric power trading).

Similarly, also in other additional areas, the amounts of tokens desired to be issued are specified, and are allocated (locked) to respective additional area networks 30 as indicated by coins 103 and 104 in the common area network 10, whereby it is possible to secure the values corresponding to the additional areas. In addition, at the moment an amount of token is specified, a token is issued on an additional area network 30, which appears as if a currency is issued. This token is not an actual electronic currency itself, and is more like an instruction certificate instructing that the token be moved, and it appears to the management business operator as if an electronic currency has been issued on the additional area.

When a transaction is made on the additional area network 30A, a token that is issued on the additional area network 30A and is actually like a "shadow of an electronic currency" is moved on the additional area network 30A, thereby circulating the value from place to place. The content of the token that is circulated from place to place on the additional area network 30A asynchronously coordinate operations of the coins 102 and the token between the additional area network 30A and the common area network 10. That is to say, values are transferred as actual electronic currencies (coins) 102 to 104 in the common area network 10 in synchronization with circulation of tokens from place to place in the additional area network 30A.

Electronic currencies issued in the common area are legally organized as savings themselves, and thereby represent savings claims themselves, not normal assets for which a deposit is required. A bank transfers actual electronic currencies as currency exchange services.

First, white coins for which no additional area for using the white coins is specified are issued from a bank, and an additional area 1 is specified as an area for use of the white coins.

By preparing a function for returning the coins to white coins, performing an operation of cancelling the specified state of the additional area so as to return the coins to white coins, and specifying another additional area for using the white coins next time, transfer can be performed without taking the trouble to return the currency to bank savings, for example, by cancelling an electronic currency specified for electric power trading, and specifying the electronic currency as a retail electronic currency.

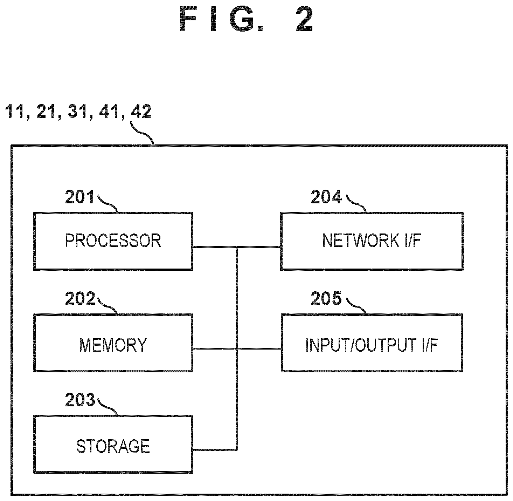

Next, configurations of the issuing apparatuses 11, the relay apparatuses 21, the management business operator apparatuses 31, and the user apparatuses 41 and 42 will be described with reference to FIG. 2. Each issuing apparatus 11 includes a processor 201, a memory 202, a storage 203, a network interface (I/F) 204, and an input/output I/F 205.

The processor 201 is a control unit that performs overall control of the issuing apparatus 11. The processor 201 includes at least one of a central processing unit (CPU), a graphics processing unit (GPU), and a micro-controller that execute a program or an operating system (OS) stored in the storage 203. The memory 202 is constituted by a dynamic random access memory (DRAM) and a static random access memory (SRAM) used as a work memory of the processor 201, and the like.

The storage 203 includes a hard disk drive (HDD) and a solid state drive (SSD) that store at least one of a program that is executed by the processor 201, an OS, and a data table and setting values that are used by the program. The input/output I/F 205 is a user interface that includes an input device that includes at least one of a keyboard, a touch panel, and a microphone for accepting a user operation, and an output device that includes at least one of a display, a speaker, and an LED. Note that, in the present specification, a description will be given assuming that the relay apparatuses 21, the management business operator apparatuses 31, and the user apparatuses 41 and 42 also have a hardware configuration similar to the hardware configuration of the issuing apparatuses 11. Note that, in an example, at least one of the issuing apparatuses 11, the relay apparatuses 21, the management business operator apparatuses 31, and the user apparatuses 41 and 42 does not need to include the input/output I/F 205, and, in this case, at least one of the issuing apparatuses 11, the relay apparatuses 21, the management business operator apparatuses 31, and the user apparatuses 41 and 42 that does not include the input/output I/F 205 may accept an operation instruction and output an operation result via the network I/F 204.

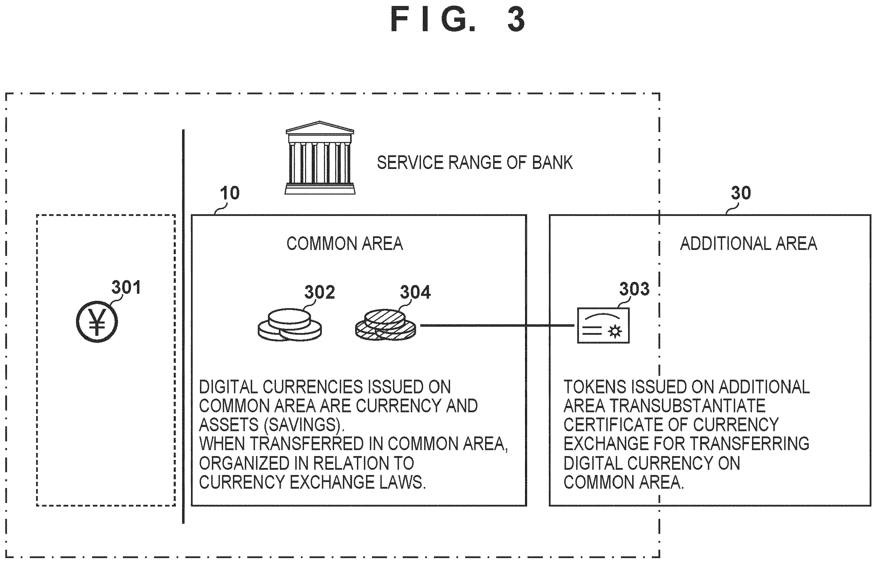

Next, flow of processing of the electronic currency management system 1 according to the present embodiment will be described with reference to FIG. 3.

First, a management business operator sends cash collateral 301 related to management of a token to an issuer, specifically a bank account or the like of the issuer, thereby paying the collateral.

Next, the issuing apparatus 11 issues an electronic currency (coins) 302 corresponding to the collateral, on the common area network 10. Here, the issued coins 302 indicate that the issuer is the issuing apparatus 11, but are white coins that have not been associated with any token. In addition, an instruction to transfer white coins cannot be given by the management business operator apparatus 31, and can be given only by the issuing apparatus 11.

Next, the user of an additional area network notifies a bank that is the issuer of the electronic currency, of a type and an amount of token to be issued, an identifier of a management business operator, and the like, through an application system or the like of the bank, for example.

The bank that has received the token issuance notification instructs the issuing apparatus 11 to issue a token for the specific additional area, and thereby the issuing apparatus 11 can transfer white coins 302 as (colored) coins 304 associated with a token 303.

The relay apparatus 21 monitors the common area 10, and can transfer a coins 304 associated with the token 303 by detecting transfer thereof on the additional area.

The relay apparatus 21 that has detected transfer of a token instructs the common area network 10 to transfer coins. The relay apparatus 21 instructs the common area network 10 to change the owner of coins associated with the token, from a transfer source to a transfer destination.

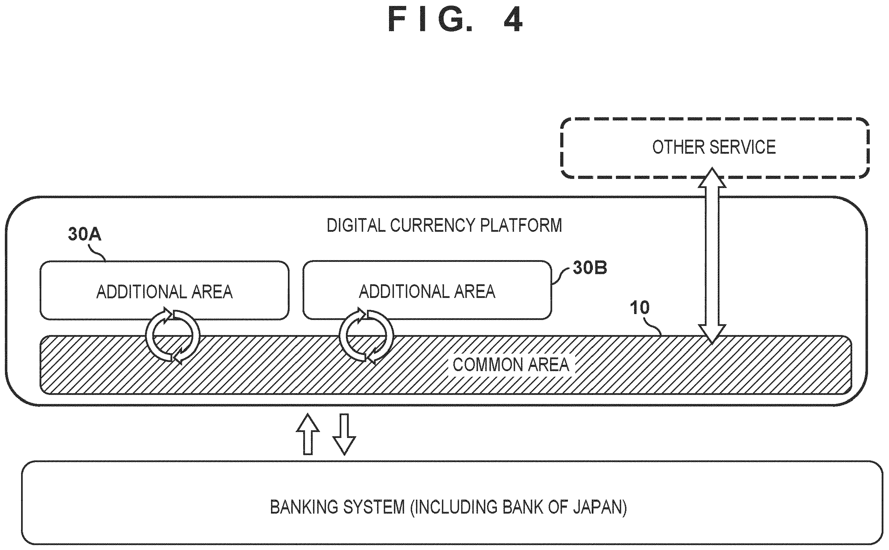

As shown in FIG. 4, an electronic currency issued in the common area network 10 is locked by the user specifying an identifier of the additional area network 30 that is used by the user, and transfer can be performed for only transactions in which the specified additional area network 30 serves as a sender or a recipient, and transfer is not performed unless an instruction is received from an apparatus within the additional area network 30.

That is to say, actual electronic currencies are present in the common area network 10. In addition, the additional area networks 30 hold tokens that transubstantiate the actual electronic currencies.

The electronic currencies issued on the common area are organized as savings. In an additional area, a token is issued as a certificate that represents a currency exchange transaction for transferring an (actual) electronic currency on the common area. The electronic currency itself is savings, and thus it is possible to manage and consume the electronic currency.

It is possible to provide a new settlement platform that can complete a reliable electronic currency backed by an existing legal currency mechanism without depending on an old legacy system whenever possible, and to realize a convenient service by realizing the interoperability with commercial distribution based on the programmability and the like.

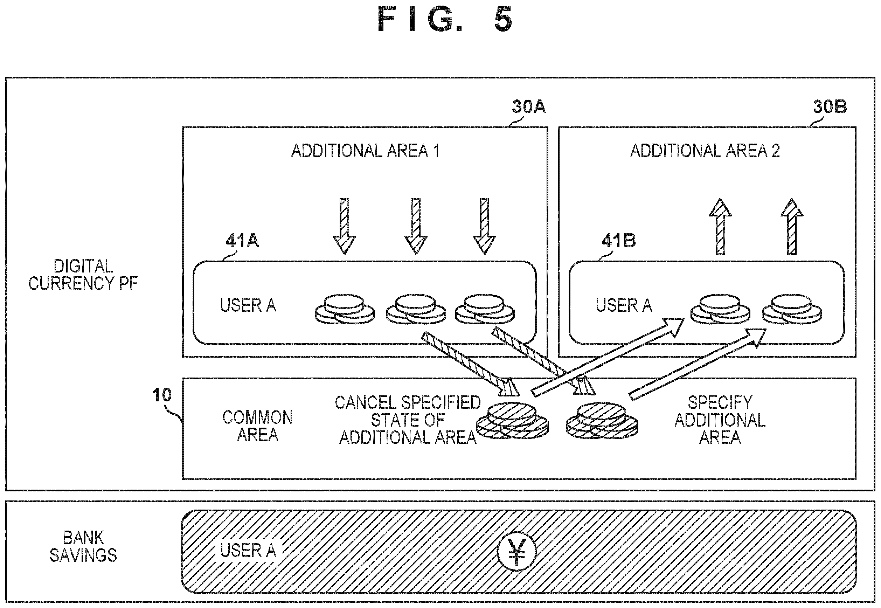

In addition, as shown in FIG. 5, it is possible to realize transfer of a digital currency between additional areas without issuance/redemption as follows.
(1) A specified status of a token received on the additional area network 30A is canceled, and coins associated with the additional area 30A are converted into white coins in the common area network 10. Accordingly, the amount of the token in the additional area network 30A is decreased by an amount of transfer.
(2) White coins obtained by converting an electronic currency are associated with the additional area network 30B, and the amount of a token in the additional area network 30B is increased by an amount of transfer.

Accordingly, transfer of the electronic currency between additional area networks is completed.

Note that the example in FIG. 5 illustrates processing for transferring a value between different additional areas, in which the user apparatus 41A and the user apparatus 41B associated with the same user serve as a remitter and a remittee, respectively. In this case, in the common area, only the additional area network to which the coins associated with the user belong changes, and the total amount of the value does not change. For this reason, relocation of bank savings is not performed.

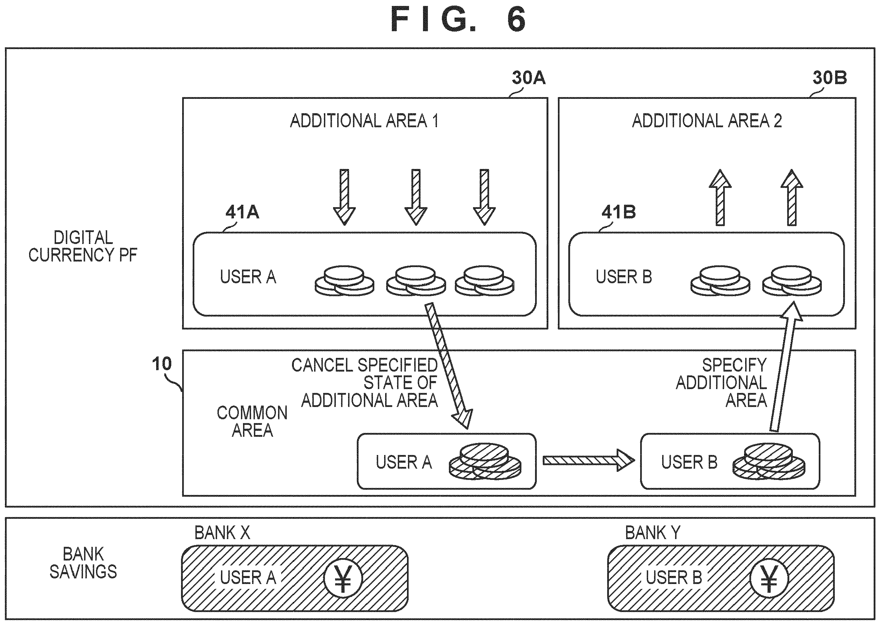

In addition, as shown in FIG. 6, in the following procedure, transfer of an electronic currency between additional areas by different users is realized without performing issuance/redemption.
(1) The user apparatus 41A corresponding to a user A of the additional area network 30A cancels the specified status of an electronic currency associated with a token on the additional area network 30A, and converts the token into white coins.
(2) The relay apparatus 21A instructs the common area network 10 to transmit the white coins obtained by converting the electronic currency in (1), from the user A to a user B.
(3) The white coins are associated with the user B, and the relay apparatus 21B provides the user apparatus 41B corresponding to the user B, with a token of the additional area network 30B.

Note that, in the example in FIG. 6, transfer of the value is performed from the user apparatus 41A belonging to the additional area network 30A to the user apparatus 41B belonging to the additional area network 30B, and thus, also in the common area network 10, transfer of coins is performed.

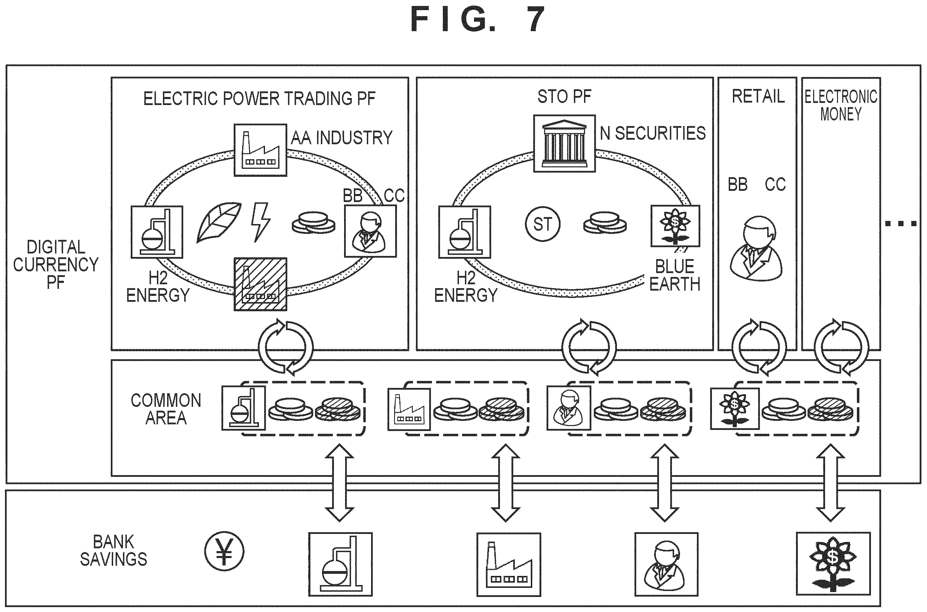

In addition, as shown in FIG. 7, different additional area networks such as an electric power trading platform (PF), a retail platform, and an electronic currency, which correspond to additional areas, can be supported using one common area network.

Accordingly, it is possible to easily start an application that uses an additional area network, and the convenience for a management business operator improves. In addition, a plurality of issuing entities can share running operations of a common area, and interbank remittances can be performed using an electronic currency. Also, it is possible to improve the interoperability between additional area networks.

When an electronic currency is transferred between banks, an interbank settlement needs to be taken into consideration similarly to ordinary remittance. Similarly to ordinary interbank remittance, there are cases where an offset settlement is performed through money transfer using a Bank-of-Japan current account, but customer remittance needs to be made via the Zengin Data Telecommunication System. For this reason, in the electronic currency management system according to the present embodiment, an electronic currency for an interbank settlement is issued such that processing until a settlement can be completed on an electronic currency platform as much as possible. Accordingly, customer remittances do not need to be made via the Zengin Data Telecommunication System. Furthermore, even when, in the future, central bank digital currencies (CBDC) are issued and wholesale-type CBDC for interbank settlements is introduced, smooth migration can be performed.

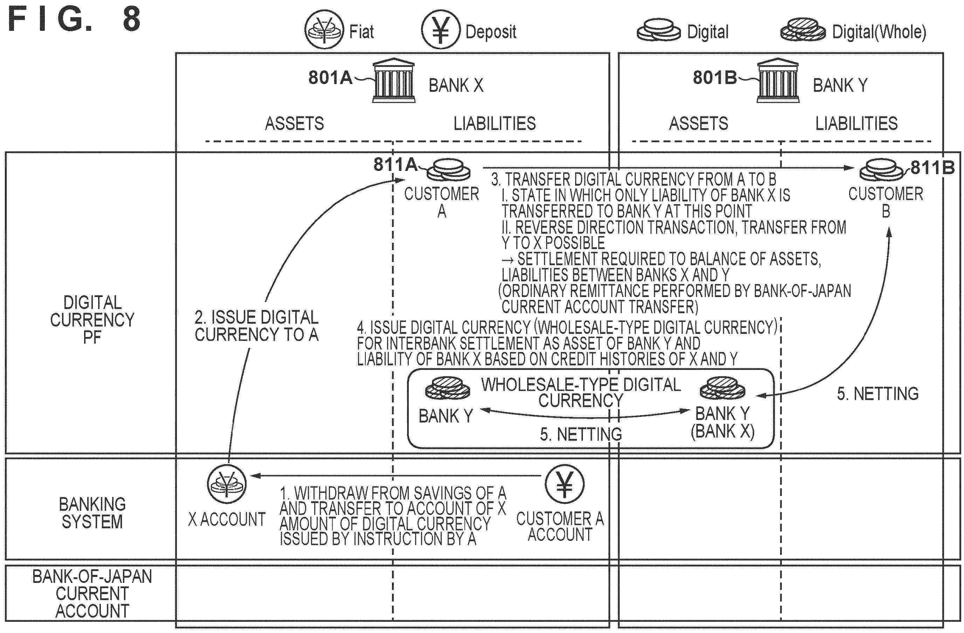

As shown in FIG. 8, for example, when a user 811A has a savings account of an issuer 801A and a user 811B has a savings account of an issuer 801B, and the user 811A makes a remittance to the user 811B, money transfer is performed between banks of the issuing entities 801A and 801B.

The issuer 801A decreases the savings of the user 811A and the issuer 801B increases the savings of the user 811B, thereby a settlement is made between the users 811A and 811B. In other words, when instructed by a depositor to transfer savings between banks, the issuer 801A makes an interbank settlement with the issuer 811B. At this time, the amount in the interbank settlement is large, and thus a bank hardly makes a settlement with another bank using cash, and, usually, interbank settlements are made through transfer of savings (in many cases, savings in a central bank current account of the bank).

In a common area of a double-layer-structure electronic currency platform, interbank settlement processing such as that described above is completed on a PF without using savings in a central bank current account, and thus, a wholesale-type electronic currency is issued to make an interbank settlement such as that described above, and the finality of settlement that accompanies transfer of electronic currency is secured through netting of interbank settlement processing.

Specifically, savings equivalent to an amount of electronic currency that is to be issued is withdrawn from the account of the user 811A, and is transferred to the account of the issuer 801A, and an electronic currency is issued for the user 811A. Next, the electronic currency is transferred from the user 811Ato the user 811B. At this point in time, only liabilities of the issuer 801A are transferred to the issuer 801B.

In addition, there is a need to settle the balance of assets and liabilities between the issuing entities 801A and 801B. Ordinary remittance is performed through transfer using a Bank-of-Japan current account. An electronic currency for interbank settlements (wholesale-type electronic currency), which serves as assets of the issuer 801B and liabilities of the issuer 801A, is issued based on credit histories of the issuing entities 801A and 801B, thus enabling netting of settlement processing between the issuing entities 801A and 801B.

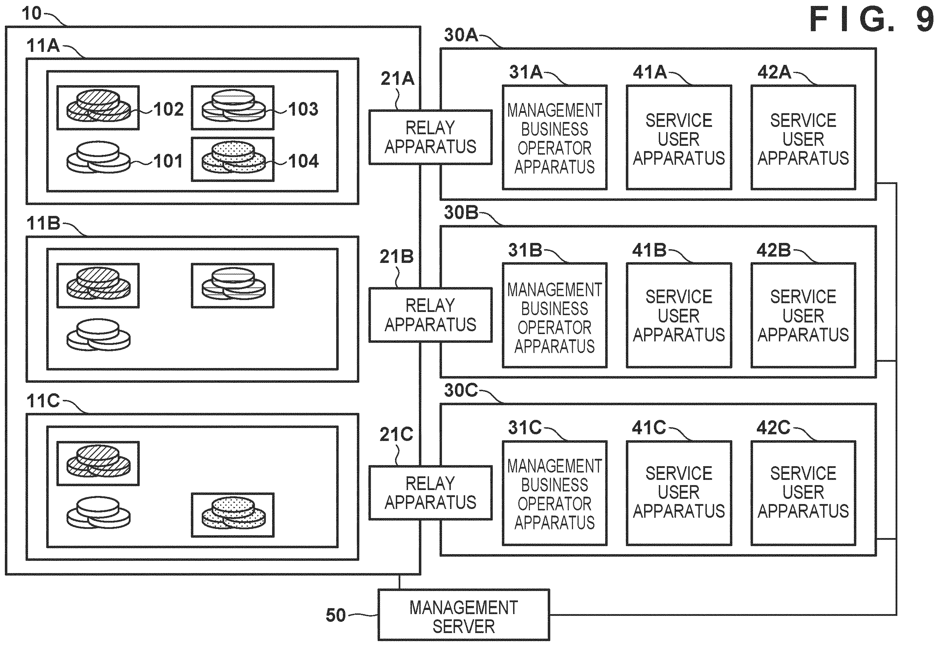

Next, an electronic currency management system according to the present embodiment will be described with reference to FIGS. 9 to 21.

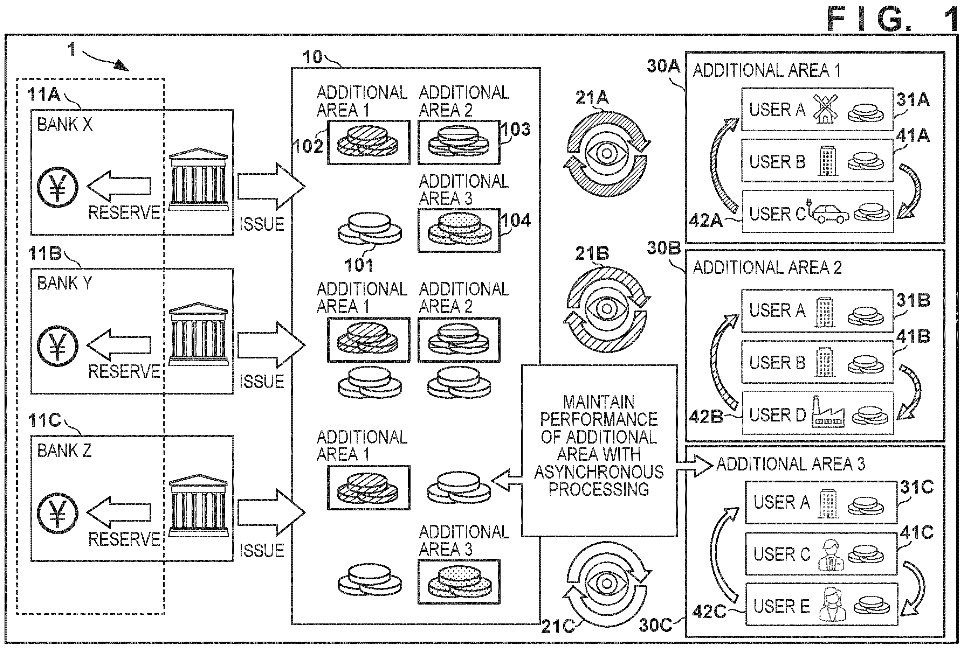

The electronic currency management system will be described below with reference to FIG. 9. The electronic currency management system 1 according to the present embodiment includes a common area network 10, issuing apparatuses 11A, 11B, and 11C (hereinafter, may be referred to as "issuing apparatuses 11" without distinguishing therebetween), relay apparatuses 21A, 21B, and 21C (hereinafter, may be referred to as "relay apparatuses 21" without distinguishing therebetween), additional area networks 30A, 30B, and 30C (hereinafter, may be referred to as "additional area networks 30" without distinguishing therebetween), management business operator apparatuses 31A, 31B, and 31C (hereinafter, may be referred to as "management business operator apparatuses 31" without distinguishing therebetween), user apparatuses 41A, 41B, and 41C (hereinafter, may be referred to as "user apparatuses 41" without distinguishing therebetween) and user apparatuses 42A, 42B, and 42C (hereinafter, may be referred to as "user apparatuses 42" without distinguishing therebetween), and a management server 50. The common area network 10, the issuing apparatuses 11, the relay apparatuses 21, the additional area networks 30, the management business operator apparatuses 31, and the user apparatuses 41 and 42 have been described with reference to FIG. 1, and thus a description thereof is omitted.

Note that FIGS. 1 and 9 illustrate the electronic currency management system assuming that there are electronic currencies in the respective issuing apparatuses 11 such that who is managing an issued electronic currency is clearly shown. However, there are cases where, if the common area network 10 is a blockchain network, an electronic currency is managed using a distributed ledger managed by a plurality of issuing apparatuses 11. In addition, there are also cases where data itself of an electronic currency is stored in the management server 50, and the issuing apparatuses 11 have only an authority to perform operations such as setting of an attribute of the electronic currency. That is to say, in FIGS. 1 and 9 illustrate electronic currencies only in order to show association with the issuing apparatuses that manage the electronic currencies, and an apparatus that stores electronic data of an electronic currency is not limited.

The management server 50 registers the issuing apparatuses 11, the management business operator apparatuses 31, and the user apparatuses 41, on the common area network 10 and the additional area networks 30. In addition, as an additional area network 30 is newly created, a relay apparatus 21 is registered.

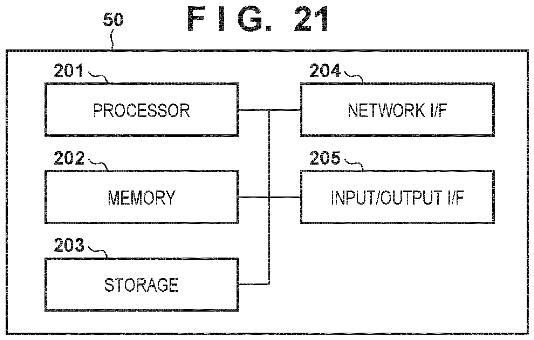

Next, the configuration of the management server 50 will be described with reference to FIG. 21. Similarly to the issuing apparatuses 11, the management business operator apparatuses 31, and the user apparatuses 41, the management server 50 includes a processor 201, a memory 202, a storage 203, a network interface (I/F) 204, and an input/output I/F 205. The processor 201, the memory 202, the storage 203, the network interface (I/F) 204, and the input/output I/F 205 have a configuration similar to that in FIG. 2, and thus a detailed description thereof is omitted.

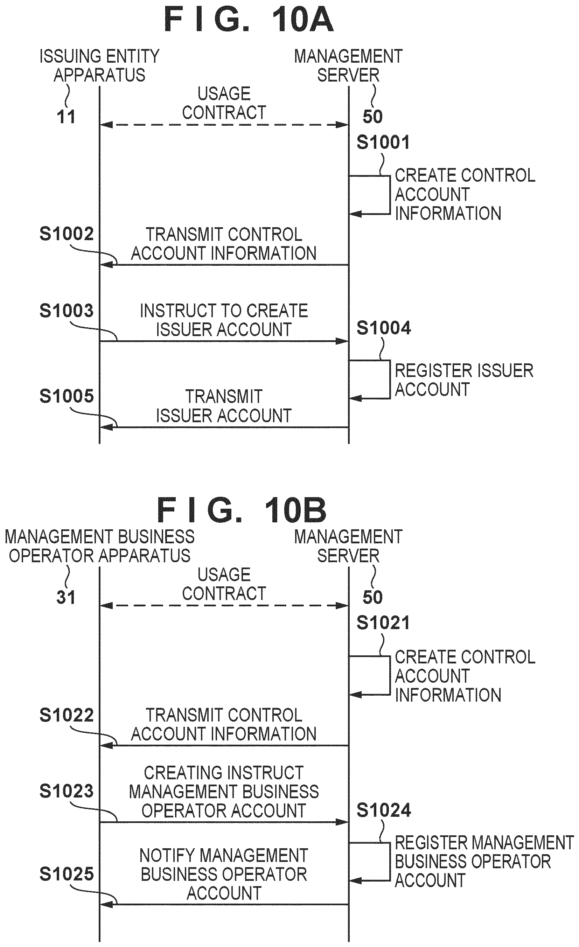

Processing that is performed in the electronic currency management system 1 will be described below with reference to FIGS. 10A to 20.

### Processing for Registering Issuing Entity Apparatus 11

Processing in which an issuing apparatus 11 joins the common area network 10 will be described with reference to FIG. 10A.

First, an issuer makes a contract with a management business operator of the management server 50 to use a platform. Accordingly, the management business operator of the management server 50 registers management account information for using the electronic currency management system, to the management server 50 (step S1001).

Next, the management server 50 transmits, to the issuing apparatus 11, a management account notification that includes an ID of a user account (step S1002). The issuing apparatus 11 instructs the management server 50 to create an issuer account that has a coin issuing authority (step S1003). The management server 50 registers the account information to an issuer database, creates an issuer account (step S1004), and transmit an issuer ID to the issuing apparatus 11 (step S1005).

### Processing for Registering Management Business Operator Apparatus 31

Next, processing in which a management business operator apparatus 31 joins an additional area network 30 will be described with reference to FIG. 10B.

First, a management business operator makes a contract with the management business operator of the management server 50 to use a platform. Accordingly, the management business operator of the management server 50 registers management account information corresponding to the management business operator to the management server 50 (step S1021).

Next, the management server 50 notifies the management business operator apparatus 31 of a use account (step S1022). The management business operator apparatus 31 instructs the management server 50 to create a management business operator account that has a token issuing authority (step S1023). The management server 50 transmits a management business operator ID corresponding to the account of the management business operator, to the management business operator apparatus 31 (step S1024).

### Processing for Registering User Apparatuses 41 and 42

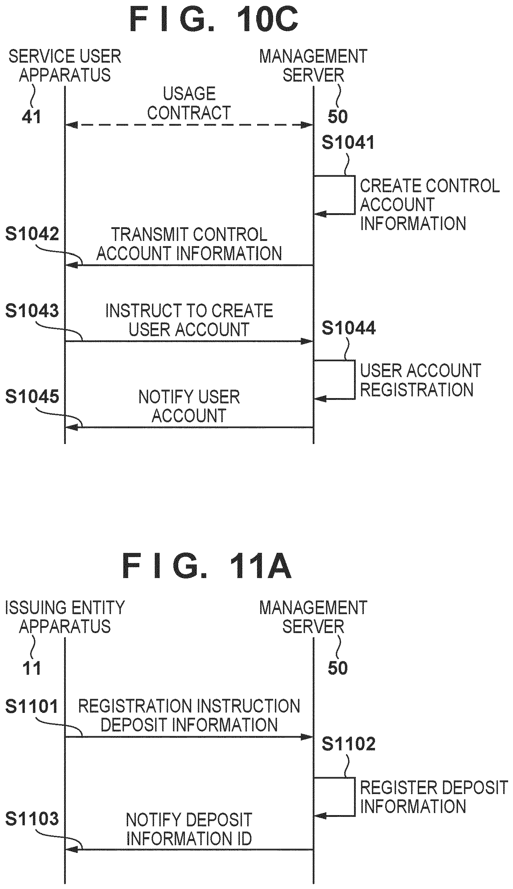

Next, processing in which user apparatuses 41 and 42 join an additional area network 30 will be described with reference to FIG. 10C.

First, users make a contract with the management business operator of the management server 50 to use a platform. Accordingly, the management business operator of the management server 50 registers management account information corresponding to the users, to the management server 50 (step S1041).

Next, the management server 50 notifies the user apparatuses 41 and 42 of use accounts (step S1042). The user apparatus 41 instructs the management server 50 to create user accounts that have an authority to purchase, remit, and receive a token (step S1043). The management server 50 transmits user IDs corresponding to the accounts of the users to the user apparatuses 41 and 42 (step S1044).

### Depositing Processing

Next, processing for making a security deposit required for an issuing apparatus 11 to issue coins will be described with reference to FIG. 11A. Note that a management business operator transmits cash collateral related to management of a token to an issuer, specifically, a bank account or the like of the issuer, and thereby paying the collateral.

The issuing apparatus 11 registers deposit information to the management server 50 (step S1101). Here, the deposit information that is registered includes an issuer ID and a collateral amount. In another example, an ID of coins associated with the issuer ID may be registered as the deposit information. Next, the management server 50 registers the deposit information to a deposit information database (step S 1 102). An identifier (deposit information ID) in the deposit information database corresponding to a registered deposit is then transmitted to the issuing apparatus 11 (step S1103).

Note that, in addition to the above-described deposit information, a remaining amount of deposit may be managed using the deposit information database. Accordingly, even when a predetermined amount of deposit is made, and then a smaller amount of coins than an amount of coins that can be issued based on the deposit is issued once, by decreasing the remaining amount of deposit by an amount corresponding to the amount of issued coins, it is possible to manage the number of remaining coins that can be issued.

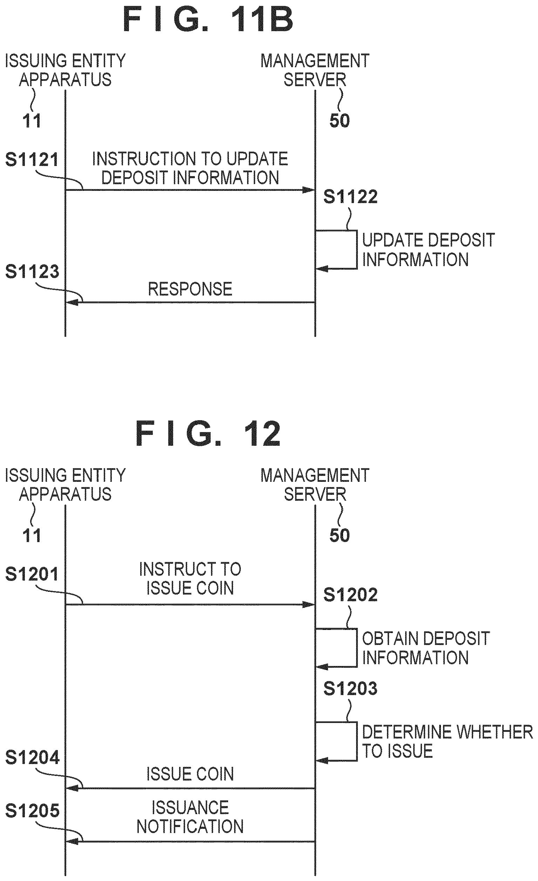

Note that, also deposit information that has been when registered once is updated by additionally making a deposit or the like, as shown in FIG. 11B, the deposit information to be updated is transmitted to the management server 50 along with the deposit information ID (step S1121), and thus the management server 50 can update the data in the deposit information database (step S1122). Confirming the deposit, the management server 50 transmits a response to the issuing apparatus 11 (step S1123).

Note that, when the issuing apparatus 11 is managed by a bank business operator, the depositing processing shown in FIG. 11A may be unnecessary. On the other hand, when the issuing apparatus 11 is managed by a business operator different from a bank business operator, such as a funds transfer service provider, the depositing processing shown in FIG. 11A may be necessary. That is to say, determination as to whether or not the issuing apparatus 11 is to perform depositing processing may be performed in accordance with a regulation that an issuer such as a manager of the issuing apparatus 11 conforms.

### Processing for Issuing Coins

Next, processing until an issuing apparatus 11 issues coins associated with a cash currency will be described with reference to FIG. 12.

First, in step S1201, the issuing apparatus 11 transmits a request to issue coins, to the management server 50. The request to issue coins includes an issuer ID, a coin ID, and the amount of coins to be issued.

The management server 50 uses the issuer ID included in the request to issue coins, and obtains deposit information whose issuer ID matches the issuer ID, out of the deposit information registered in the deposit information database, (step S1202). Next, a cash collateral amount is specified based on the deposit information, and the amount of coins that can be issued is determined (step S1203). As described above, if the deposit information includes the remaining amount of deposit, the amount of coins that can be issued may be determined based on the remaining amount of deposit.

If, as a result of determination, it is determined that it is possible to issue the amount of coins included in the issuance request, the management server 50 issues coins in a wallet of the issuer on the common area network 10 of the issuing apparatus 11 (step S1204). Next, the issuing apparatus 11 is notified of the amount (step S1205).

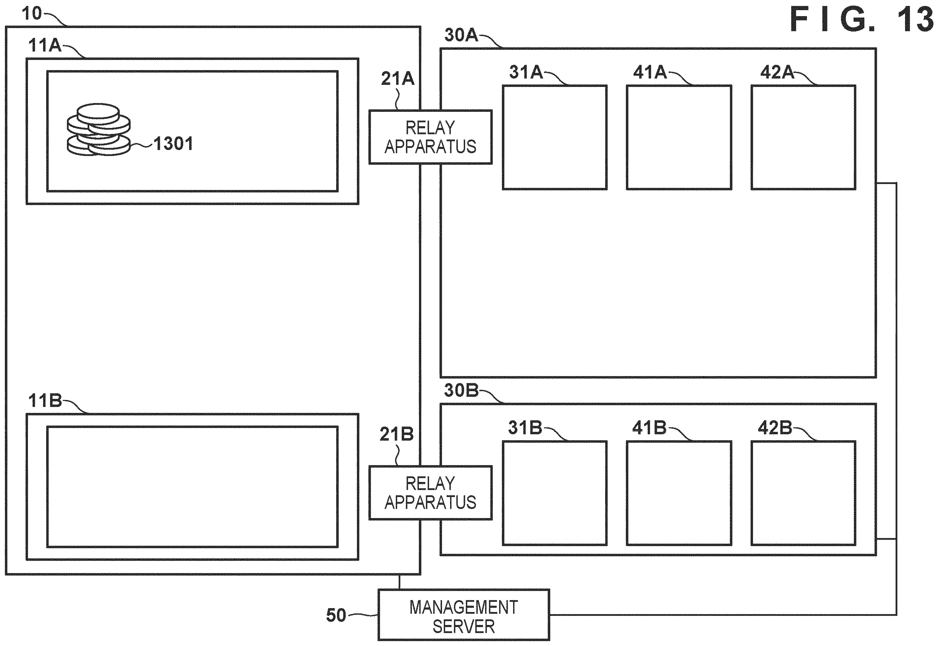

Here, the state of the wallet after coins have been issued will be described with reference to FIG. 13. Note that, for ease of description, a description will be given assuming that, in the example in FIG. 13, the issuing apparatus 11A issues coins and no coins are issued other than that. In addition, a description will be given with reference to FIG. 13 assuming that there are two additional area networks.

At the point of time when coins are issued, the coins are not associated with any additional area network 30. In other words, the coins issued in step S1204 in FIG. 12 are white coins 101. The white coins 101 are set to the issuing apparatus 11A issued by the owner, and processing such as transfer can be performed only by the issuing apparatus 11A.

### Processing for Registering Token

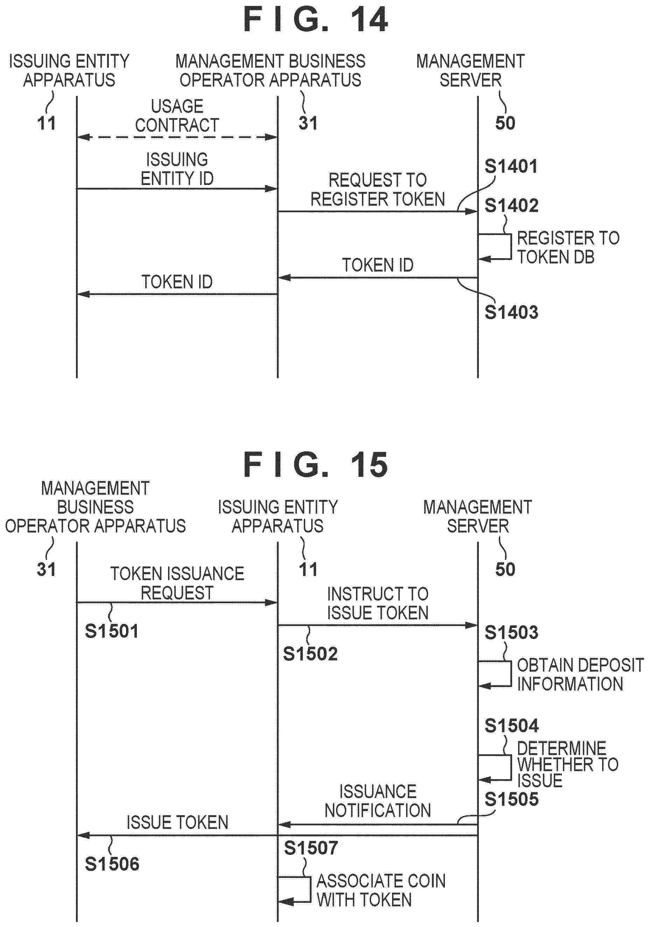

Next, processing for newly registering a token that is to be circulated in an additional area network 30 will be described with reference to FIG. 14. Assume that an issuer and a management business operator have made a contract with each other regarding management of a token to be circulated in the additional area network 30, and the management business operator apparatus 31 has obtained the issuer ID of the issuing apparatus 11.

The management business operator apparatus 31 transmits a request to register a token, to the management server 50 (step S1401). The request to register the token includes a management business operator ID, a token name, a token symbol, and information indicating coins that back the value of the token (backing coins). Based on the management business operator ID included in the request to register the token, the management server 50 registers the management business operator ID, the token name, the token symbol, and the backing coins included in the request to register the token, to a token database in association with a token ID (step S1402). The registered token ID is then transmitted as a response to the registration request, to the management business operator apparatus 31 (step S1403). Accordingly, the management business operator can perform processing such as issuance, redemption, transfer, and the like of the token corresponding to the token ID.

### Processing for Issuing Token

Next, processing for newly issuing a token to be circulated in an additional area network 30 will be described with reference to FIG. 15.

Note that a description will be given assuming that the management business operator has an account that corresponds thereto and is under management of an issuer that is a bank.

First, the management business operator apparatus 31 transmits a request to issue a token, to the relay apparatus 21, and the relay apparatus 21 transmits the request to issue a token, to the issuing apparatus 11, whereby the issuing apparatus 11 obtains the request to issue a token (step S1501). Note that, if the management business operator apparatus 31 is configured to be able to directly transmit a request to issue a token to the issuing apparatus 11, the management business operator apparatus 31 may transmit a request to issue a token to the issuing apparatus 11 without the relay apparatus 21 intervening therebetween. The request to issue a token includes a token ID and an amount of token. Upon receiving the request to issue a token, the issuing apparatus 11 transmits a request to issue a token that includes an issuer ID, the token ID, and the amount of token, to the management server 50 (step S1502). The management server 50 obtains deposit information from the deposit information database based on the issuer ID (step S1503), and determines whether or not it is possible to issue a token equivalent to the amount of token included in the request to issue a token (step S1504). Determination as to whether or not a token equivalent to the amount of token can be issued may include determination as to whether or not the issuing apparatus 11 holds white coins equivalent to the amount of token, in a wallet of the issuing apparatus 11. Alternatively, determination as to whether or not the issuer holds financial assets equivalent to the amount of token to be issued, in an account of the management business operator may be included.

If the management server 50 determines that it is possible to issue a token equivalent to the amount of token included in the token issuance instruction, the management server 50 transmits an issuance notification to the issuing apparatus 11 (step S1505), and issues a token, in a wallet of the management business operator 31 of the additional area network 30 corresponding to the token ID (step S1506).

Upon receiving the issuance notification, the issuing apparatus 11 associates white coins held in the wallet of the issuing apparatus 11, with the additional area network 30 (step S1507). That is to say, if an attribute tag can be provided to coins, coins can be converted into colored coins associated with the additional area network 30 by setting an attribute tag that is not set at the time of issuance, to an ID or the like of the management business operator. In the present embodiment, if an attribute tag of coins is associated with the additional area network 30, and, for example, the management business operator apparatus 31 has a wallet in the common area network 10, coins equivalent to the amount of token that the management business operator apparatus 31 has may be associated with the additional area network 30 by transferring the coins from the wallet of the issuing apparatus 11 to the wallet of the management business operator apparatus 31.

In addition, in step S1507, the owner of coins is set to the management business operator apparatus 31. In addition, although the owner of colored coins can be changed, but the coins need to be converted into white coins once for transfer or redemption.

Amounts of token desired to be issued are specified, and are allocated (locked) to respective additional area networks 30 as indicated by the coins 103 and 104 on the common area network 10, whereby it is possible to secure the values corresponding to the additional areas. In addition, at the moment an amount of token is specified, a token is issued on an additional area network 30, which appears as if a currency is issued. This token is not an actual electronic currency itself, and is more like an instruction certificate instructing that the token be moved, and it appears to the management business operator as if an electronic currency has been issued on the additional area network. Coins issued on the common area network 10 are locked by specifying the identifier of the additional area network 30 that is used by the user, and transfer can be performed for only transactions in which the specified additional area network 30 serves as a sender or a recipient, and transfer is not performed unless an instruction is received from an apparatus within the additional area network 30.

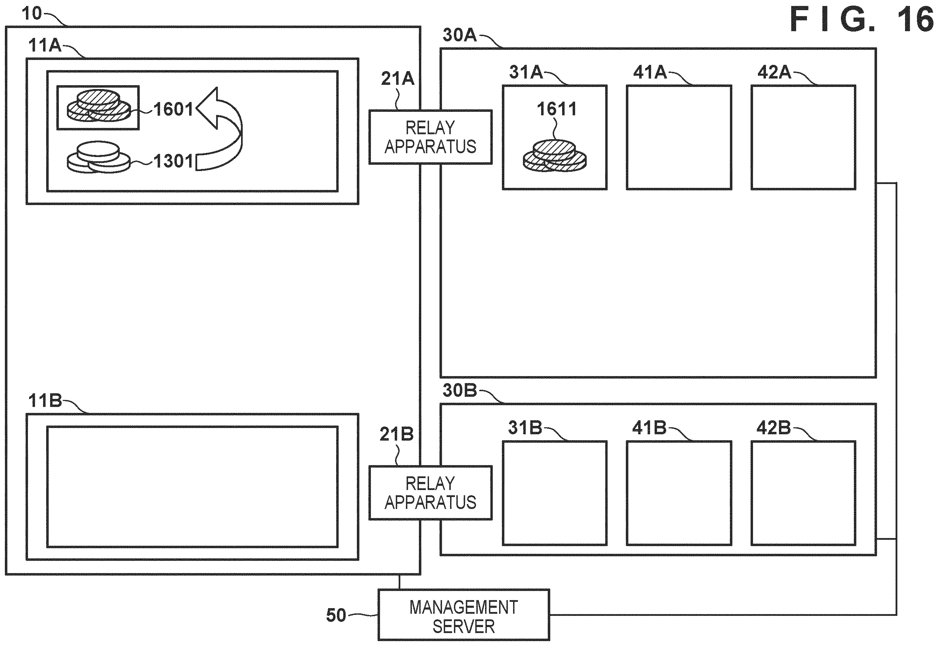

Next, the electronic currency management system 1 after a token has been issued will be described with reference to FIG. 16. FIG. 16 is a diagram of a case where a token is issued on the additional area network 30A by the issuer 11A that represents the issuer, after the state in FIG. 13.

The issuer 11A has a wallet of the issuer 11A, on the common area network 10, and holds white coins 1301. The issuer 11A also holds colored coins 1601 corresponding to the additional area network 30A, and the coins 1601 can be used only for transmission/receiving of a token in which the additional area network 30A serves as a remitter or a remittee. In addition, the management business operator apparatus 31A has issued a token 1611.

### Processing for Purchasing Tokens

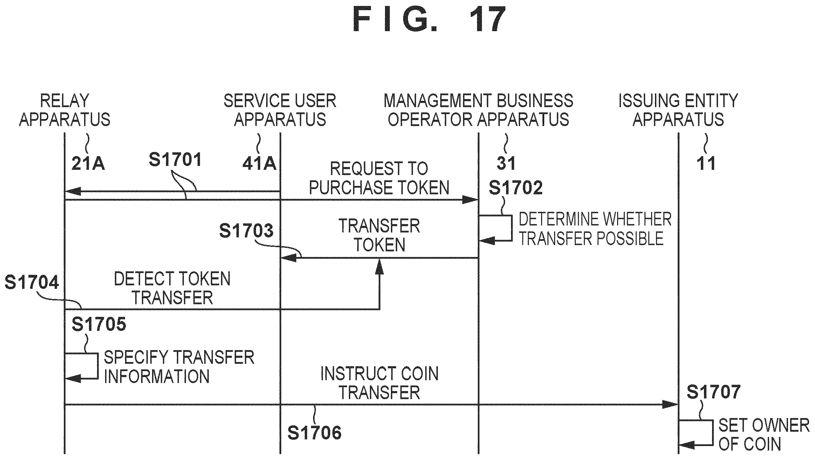

Next, an example will be described in which the user makes a payment in a currency to a management business operator, and obtains a token to be circulated in the additional area network 30A, with reference to FIG. 17.

The user apparatus 41A transmits, to the relay apparatus 21A, a token purchase request that includes a user ID of a token, a type of token to be purchased, an amount of token, and payment information for designating a way of payment, and the relay apparatus 21A transfers the token purchase request to the management business operator apparatus 31A (step S1701). The payment information may include a way of payment such as debiting and a payment type indicating whether a payment is made with a cash currency or an electronic currency, for example. Note that, if the user apparatus 41A1 is configured to be able to directly transmit a token purchase request to the management business operator apparatus 31A, the user apparatus 41A may transmit a token purchase request to the management business operator apparatus 31A, without the relay apparatus 21A intervening therebetween.

The management business operator apparatus 31A determines whether or not a token is to be transferred in accordance with the purchase request, based on the payment information and the type and amount of token (step S1702). If it is determined that the token included in the purchase request can be purchased through the way of payment included in the payment information, the management business operator apparatus 31A transmits, to the additional area network 30A, a transfer instruction to transfer a specified amount of a specified token from a wallet of the management business operator apparatus 31A to a wallet of the user apparatus 41A. The token transfer instruction is transmitted to the issuing apparatus 11A (step S1703). The token transfer instruction includes a transfer source, a transfer destination, a type of token, and an amount of token.

When the transfer instruction is transmitted to the additional area network 30A, the relay apparatus 21A detects the transfer instruction (step S1704), and specifies the transfer source and the transfer destination of the token (step S1705). Specifying the transfer source and the transfer destination, the relay apparatus 21A transmits a coin transfer instruction corresponding to the token transfer instruction, to the issuing apparatus 11A corresponding to the additional area network 30A (step S1706). The issuing apparatus 11A is instructed to transfer coins equivalent to the value of a cash currency converted from a token to be transferred, for example, based on the value and amount of a cash currency converted from the token, and the value of a cash currency converted from coins.

The issuing apparatus 11A that has received the transfer instruction from the relay apparatus 21A sets the owner of coins owned by the management business operator apparatuses 31 that is a transfer source, out of the colored coins 102 corresponding to the additional area 1, to the user apparatus 41A that is a transfer destination (step S1707). If the common area network 10 is a blockchain network, an instruction to transfer coins is transmitted from the transfer source to the transfer destination. Accordingly, also in the common area network 10 for securing values, transfer of a value can be performed.

Note that, although not illustrated in FIG. 17, payment processing from the user apparatus 41A to the management business operator apparatus 31A is separately performed. This may be performed before the token is purchased, or after transfer of the token has been completed.

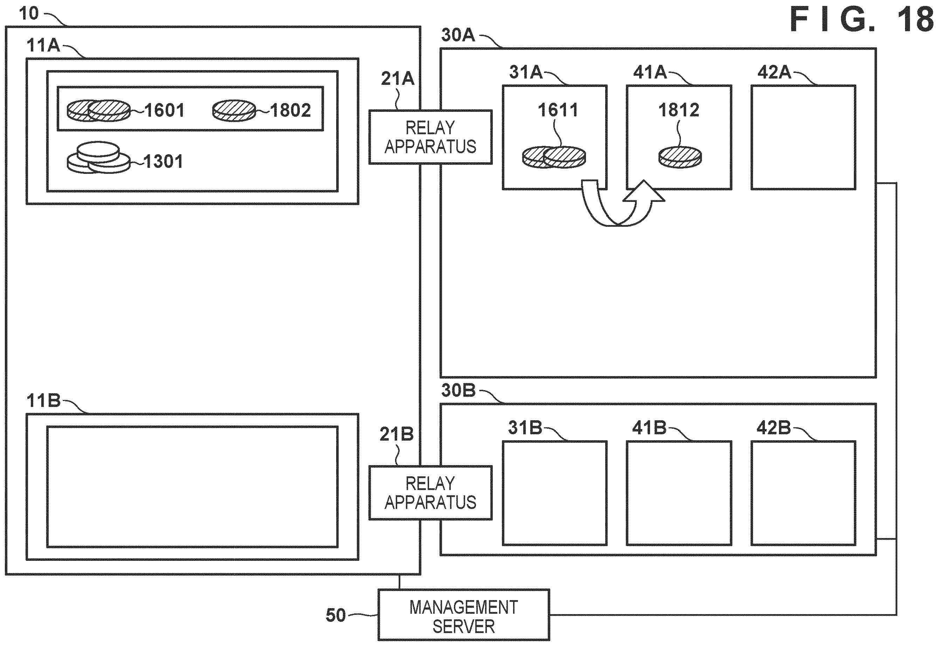

Next, a state after a token has been purchased will be described with reference to FIG. 18. FIG. 18 is a diagram showing a state where the user apparatus 41A has purchased a token from the management business operator apparatus 31A after the state in FIG. 16.

The issuer 11A has a wallet of the issuer 11A, on the common area network 10, and holds the white coins 1301. The issuer 11A also holds colored coins 1601 and 1802 corresponding to the additional area network 30A. The owner of the colored coins 1601 is set to the management business operator apparatus 31A, and the owner of the colored coins 1802 is set to the user apparatus 41A. In addition, tokens 1611 and 1812 are held in wallets of the management business operator apparatus 31A and the user apparatus 41A on the additional area network 30A, in correspondence with the colored coins 1601 and 1802.

### Example 1 of Processing for Transferring Token

Similarly to the above-described processing for purchasing a token, also regarding a token transfer instruction, a value can be transferred by the common area network 10 and an additional area network 30 coordinating with each other.

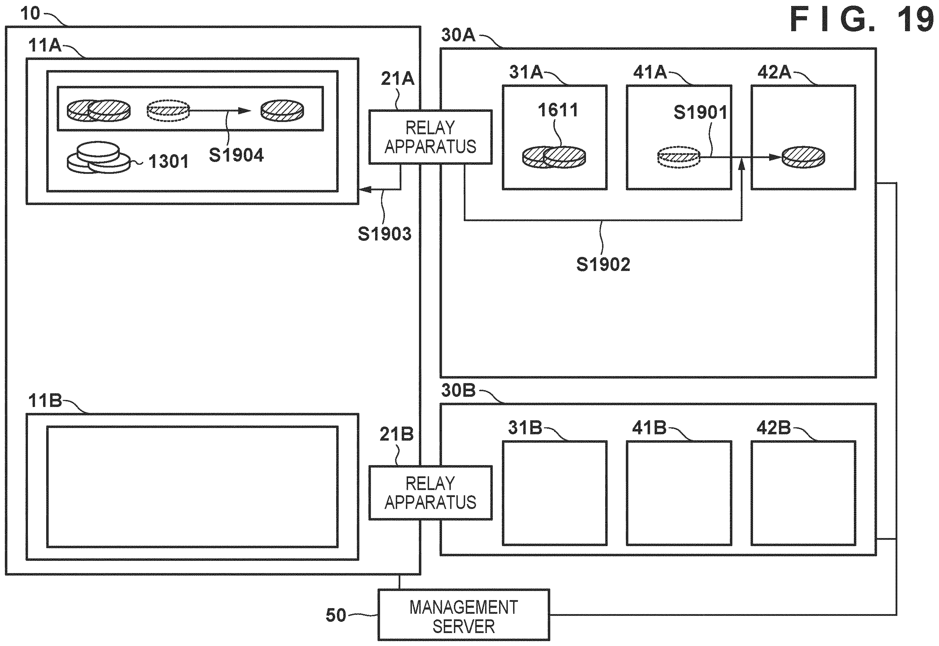

An example will be described in which a token is transferred between users on the same additional area network 30A, with reference to FIG. 19.

The user apparatus 41A transmits a transfer instruction in which the user apparatus 42A serves as a transfer destination (step S1901). In the present embodiment, a description will be given assuming that the transfer instruction is an order for a transaction to the additional area network 30A that is a blockchain network, but, if the management business operator apparatus 31A manages the additional area network 30A, the transfer instruction may be transmitted to the management business operator apparatus 31A. The instruction to transfer a token includes a transfer source, a transfer destination, a type of token, and an amount of token.

When a transfer instruction is transmitted to the additional area network 30A, the relay apparatus 21A detects the transmitted transfer instruction (step S1902), and transmits the transfer instruction to the issuing apparatus 11A based on the transfer source, the transfer destination, the type of token, and the amount of token, similarly to processing described with reference to FIG. 17, (step S1903).

Based on the transfer instruction, the issuing apparatus 11A sets colored coins whose owner is the user apparatus 41A that is a transfer source, out of colored coins 1802 associated with the additional area network 30A, to the user apparatus 42A.

Accordingly, as a token is transferred, coins corresponding to a cash currency can be transferred, and the value can be secured.

### Example 2 of Processing for Transferring Token

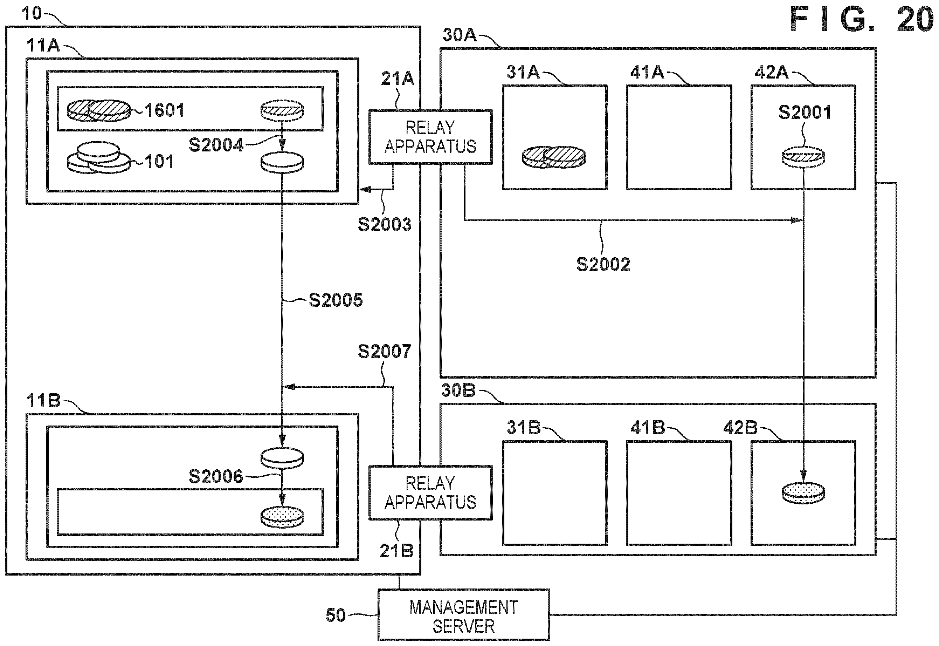

Next, an example will be described in which a token is transferred from the user apparatus 42A on the additional area network 30A to the user apparatus 42B on the additional area network 30B, with reference to FIG. 20. A description will be given assuming that a token is transferred between user apparatuses of different users, in the example in FIG. 20, but the same description applies when a token is exchanged on the additional area network 30 in which there are different user apparatuses of the same user.

The user apparatus 42A instructs the additional area network 30A to transfer a token from the user apparatus 42A on the additional area network 30A to the user apparatus 42B on the additional area network 30B (step S2001). Detecting the transfer instruction from the user apparatus 42A (step S2002), the relay apparatus 21A instructs the issuing apparatus 11A to transfer coins from the additional area network 30A to the additional area network 30B (step S2003).

The issuing apparatus 11A converts coins equivalent to the amount of token to be transferred, out of the colored coins 102 associated with the additional area network 30A, into white coins (step S2004), and transfers the resultant white coins to the issuing apparatus 11B (step S2005). Also, the issuing apparatus 11A instructs the issuing apparatus 11B to set the owner of the coins equivalent to the amount of token to be transferred, to the user apparatus 41B, and to associate it with the additional area 30B. The issuing apparatus 11B associates the transferred white coins with the additional area network 30B, and sets the owner to the user apparatus 41B (step S2006). Next, the relay apparatus 21B that has detected the instruction given from the issuing apparatus 11A to the issuing apparatus 11B transfers the token corresponding to the additional area network 30B from the user apparatus 42A to the user apparatus 42B, on the additional area network 30B. Accordingly, the token can be transferred to a wallet of the user apparatus 42B.

As described above, the relay apparatus 21 detects transfer on the common area network 10, and transfers the token on the additional area network 30 in accordance with the detected transfer. Accordingly, the token can be transferred between additional area networks by transferring coins on the common area network 10.

Note that, description has been given assuming that the additional area networks 30A and 30B are respectively associated with the different issuing apparatuses 11A and 11B on the common area 10, in the example in FIG. 20. However, the additional area networks 30A and 30B may be associated with the same issuing apparatus 11A. In this case, the issuing apparatus 11A is associated with the additional area network 30A, and after the owner converts colored coins of the issuing apparatus 11A into white coins, the resultant white coins are associated with the additional area network 30B, and thereby a token can be transferred between additional area networks.

In the present embodiment, the common area network 10 and an additional area network 30 allow a token to circulate from place to place on the additional area network 30A, and the content causes operations of the coins 102 and tokens to be performed synchronously or asynchronously in cooperation with each other between the additional area network 30A and the common area network 10.

In addition, according to the present embodiment, the electronic currencies issued on the common area network are organized as savings. In an additional area, a token is issued as a certificate that represents a currency exchange transaction for transferring an (actual) electronic currency on the common area. The electronic currency itself is used as savings, and thus it is possible to manage and consume the electronic currency.

It is possible to provide a new settlement platform that can complete a reliable electronic currency backed by an existing legal currency mechanism without depending on an old legacy system whenever possible, and to realize a convenient service by realizing the interoperability with commercial distribution based on the programmability or the like.

### Management Business Operator Apparatus

Next, the management business operator apparatuses 31 according to the present embodiment will be described. Each of the management business operator apparatuses 31 is an information processing apparatus that controls the corresponding additional area 30, and manages issuance of a token to the user apparatus 41 and transfer of a token between a plurality of user apparatuses 41, which have been described above. Note that, as will be described later, the management business operator apparatus 31 can provide additional services such as matching between a user that can provide goods or services and a user that desires to receives a good or service.

### Processing Example 1

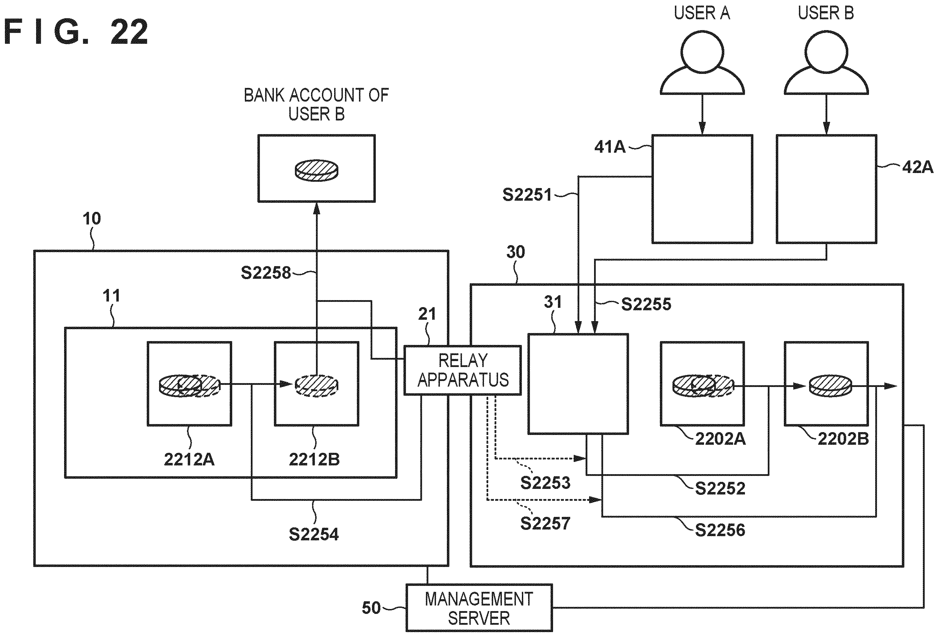

Next, an example of payment processing will be described with reference to FIG. 22. In the example in FIG. 22, a token is transferred from a user A to a user B, and thereby money transfer is made from the user A to the user B.

In FIG. 22, an account on an additional area associated with the user apparatus 41A of the user A is an additional area account 2202A, and an account on the additional area associated with the user apparatus 42A of the user B is an additional area account 2202B. Also, an account on the common area corresponding to the additional area account 2202A is a common area account 2212A, and an account on the common area corresponding to the additional area account 2202B is a common area account 2212B.

First, the management business operator apparatus 31 according to the present embodiment accepts an instruction to make a remittance (remittance instruction) from the user apparatus 41A that is a remitter (step S2251). The remittance instruction includes a transfer source and a transfer destination of a token and information indicating a transfer amount.

Next, the management business operator apparatus 31 transfers a token on the additional area network 30 based on the accepted remittance instruction (step S2252). Next, detecting the transfer of the token (step S2253), the relay apparatus 21 transfers coins on the common area network 10 (step S2254).

Accordingly, coins are transferred from the common area account 2212A to common area account 2212B. Note that, in an example, the user B performs an operation on the user apparatus 42A to transmit an account information request that designates the additional area account 2202B, to the management business operator apparatus 31, and can thereby confirm the balance in the additional area account 2202B by obtaining balance information, and confirm that remittance has been made from the user A by obtaining remittance/disbursement information.

Next, the user B performs an operation on the user apparatus 42A so as to transmit a disbursement request to the management business operator apparatus 31 (step S2255). The disbursement request includes a target account and a disbursement amount. Accepting the disbursement request, the management business operator apparatus 31 deducts the disbursement amount from the balance in the target account if the balance in the target account is larger than or equal to the disbursement amount, and transmits a disbursement instruction in the additional area 30 (step S2256). The relay apparatus 21 detects the disbursement instruction (step S2257), and transmits a disbursement instruction corresponding to the detected disbursement instruction to the common area 10 (step S2258). The disbursement instruction that is transmitted by the relay apparatus 21 designates the common area account 2212B of the user B and the disbursement amount. Accepting the disbursement instruction, the issuing apparatus 11 that manages a wallet of the common area account 2212B deducts the disbursement amount from the balance in the corresponding common area account 2212B, and transfers a legal currency corresponding to the disbursement amount to a bank account of the user B. Accordingly, the user B can receive payment of a token in the legal currency.

Note that, in an example, a remittance from the user A to the user B can be used for a payment for a commercial product or a service provided by the user B. If the user B is a sales store and the user A is a purchaser, for example, a remittance that is made via a token may be made as a payment for a commercial product from the user A to the user B.

Note that, in this processing example, a description has been given assuming that the user A that is a remitter transmits a remittance instruction. In an example, the user B that is a remittance destination may transmit a remittance instruction that requests for remittance. In this case, a configuration may be adopted in which the user B adds information regarding the additional area account 2202A of the user A, a one-time password provided by the user apparatus 41A, and the like, to the remittance instruction through predetermined communication, and the management business operator apparatus 31 verifies the remittance instruction from the user B. In addition, when a remittance request from the user A that is a remitter and a receiving request from the user B that is a remittee are received, the management business operator apparatus 31 may make a remittance. In this case, in order to determine whether or not the remittance request and the receiving request are requests related to the same remittance processing, the remittance request and the receiving request may include identification information indicating that the remittance request and the receiving request are related to the same remittance processing.

### Processing Example 2

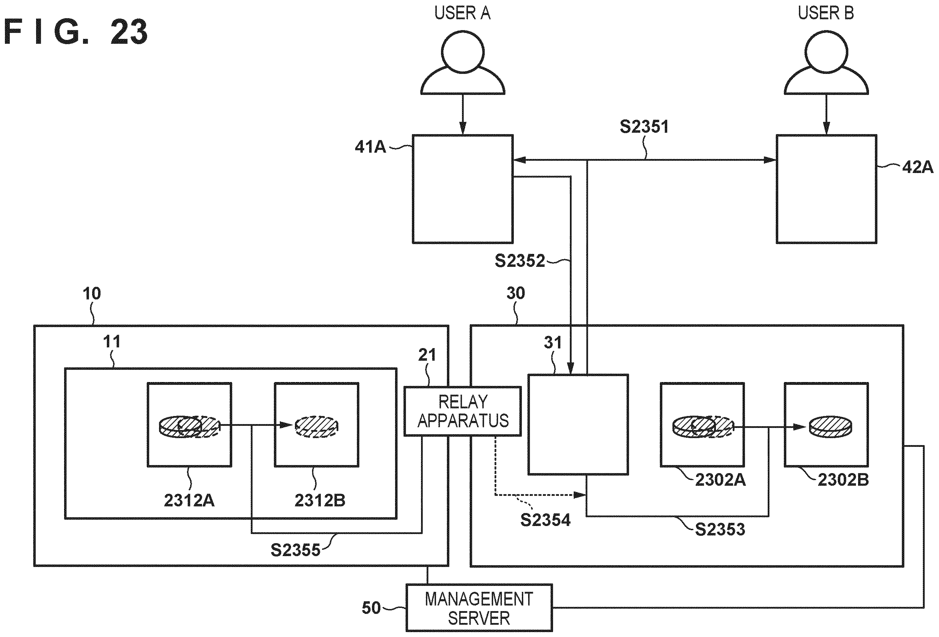

Next, an example of payment processing will be described with reference to FIG. 23. In the example in FIG. 23, a management business operator intermediates a business transaction between the user A and the user B, and a token is transferred from the user A to the user B as payment for the business transaction.

In FIG. 23, an account on an additional area associated with the user apparatus 41A of the user A is an additional area account 2302A, and an account on the additional area associated with the user apparatus 42A of the user B is an additional area account 2302B. Also, an account on a common area corresponding to the additional area account 2302A is a common area account 2312A, and an account on the common area corresponding to the additional area account 2302B is a common area account 2312B.

First, the management business operator apparatus 31 according to the present embodiment functions as a transaction platform, and performs matching between a user that provides commercial products or services (provider) and a user that desires a commercial product or a service (receiver), for example. The transaction platform manages an electronic business transaction website, and manages information regarding the commercial products or services that are provided by the provider, for example. The receiver can obtain information regarding the commercial products or services that are provided by the provider and account information of the provider by accessing the electronic business transaction website. For this reason, it is possible to request that a commercial product or a service be provided, based on the account information of the provider.

In another example, when a receiver registers information regarding a desired commercial product or service and account information of the receiver, and a provider determines that the commercial product or service is to be provided, the commercial product or service can be provided based on the account information of the receiver. Assume that, in the example in FIG. 23, the user B is the provider that provides the commercial product or service, and the user A is the receiver that desires the commercial product or service, and the user A is to pay a token for the commercial product or service.

First, in step S2351, the management business operator apparatus 31 detects that a business transaction has been agreed between the provider and the receiver. The management business operator apparatus 31 accepts, on the electronic business transaction website, purchase of a commercial product by the user A, the commercial product being sold by the user B, for example. When a business transaction is agreed, the management business operator apparatus 31 accepts an instruction to make a remittance in the additional area 30 (remittance instruction), from the user apparatus 41A (step S2352). The remittance instruction includes information indicating a transfer source and a transfer destination of a token and a transfer amount. Note that the example in FIG. 23 illustrates a case where notification on the agreement of the contract in step S2351 and the remittance instruction in step S2352 are separately performed, but a configuration may also be adopted in which the management business operator apparatus 31 accepts a message that includes notification of agreement of a contract and a remittance instruction, from the user apparatus 41A of the user A, and the management business operator apparatus 31 transfers a token on the additional area network 30.

Next, the management business operator apparatus 31 transfers a token on the additional area network 30 based on the accepted remittance instruction (step S2353). Next, detecting the transfer of the token (step S2354), the relay apparatus 21 transfers coins on the common area network 10 (step S2355).

Accordingly, the coins are transferred from the common area account 2312A to the common area account 2312B. Note that, in an example, the user B performs an operation on the user apparatus 42A so as to transmit an account information request that designates the additional area account 2302B, to the management business operator apparatus 31, whereby the user B can confirm the balance in the additional area account 2302B by obtaining balance information, and can confirm that remittance was made from the user A by obtaining remittance/disbursement information.

Note that, the user B may perform an operation on the user apparatus 42A so as to transmit a disbursement request to the management business operator apparatus 31. The disbursement request includes a target account and a disbursement amount. Accepting the disbursement request, the management business operator apparatus 31 deducts the disbursement amount from the balance in the target account if the balance in the target account is higher than or equal to the disbursement amount, and transmits a disbursement instruction to the additional area 30. The processing from this point on is similar to the processing of steps S2255 to S2258 described in Processing Example 1, and thus a description thereof is omitted. Accordingly, the user B can receive the payment of a token in a legal currency.

Note that, in the above example, a description has been given assuming that the user A proceeds to a payment after a business transaction has been agreed upon. However, in an example, the user A can make a payment when a commercial product or service B has been provided from the user such as when the commercial product has been delivered from the user B. In this case, the management business operator apparatus 31 may make a payment when a delivery completion notification is accepted by the user A, the user B, or a delivery company.

As described above, in Processing Examples 1 and 2, the management business operator of the additional area network transfers a token on the additional area in accordance with an exchange instruction given by a user. The relay apparatus that has detected the transfer of the token then transfers coins in the common area. For this reason, the operation performed by the management business operator corresponds to transmission of an exchange instruction given by the user. Then, the relay apparatus 21 further gives an exchange instruction and the issuing apparatus 11 managed by an issuer transfers coins, in other words performs exchange. Accordingly, even a management business operator that cannot legally perform exchange operations can manage an electronic currency, only by managing transfer of a token.

### Setting of Account Authorities

The issuing apparatuses 11, the management business operator apparatuses 31, and the user apparatuses 41 and 42 according to the present embodiment can realize the roles thereof by setting an authority for each account.

The user apparatuses 41 and 42 have an authority to request transfer and purchase of a token on the additional area network 30 to which the user accounts thereof belong (user authorities), for example.

Each management business operator apparatus 31 has an authority to actually transmit a token transfer instruction based on a request, on the additional area network 30 to which the account of the management business operator belongs (validator authority). The management business operator apparatus 31 also have an authority to instruct creation of a token (provider authority).

Each issuing apparatus 11 has an authority to transmit a coin remittance instruction to the common area network 10, on the common area to which the account of the issuer belongs (validator authority). The issuing apparatus 11 also has an authority to perform issuance and redemption of a digital currency (issuer authority) and an authority to give a money receiving request and a remittance request on the common area network 10 (user authority).

The control server 50 has an authority to generate a common area (admin authority), an authority to generate an additional area (provider authority), an authority to create an account, and an authority to grant each account an authority.

Each relay apparatus 21 has an authority to transmit a coin remittance instruction to the common area network 10, on the common area to which the relay apparatus 21 belongs (validator authority).

Note that settings of the above authorities can be designed by a system as appropriate. Accordingly, for example, by providing the authority of an issuing apparatus 11 and the authority of a management business operator apparatus 31 to one account, it is possible to create an account that covers the common area 10 and the additional area network 30. In addition, the authority of a management business operator apparatus 31 may be allocated to a plurality of accounts, and the authority of an issuing apparatus 11 may be allocated to a plurality of accounts. Accordingly, the common area and the additional area can be managed using a plurality of accounts.

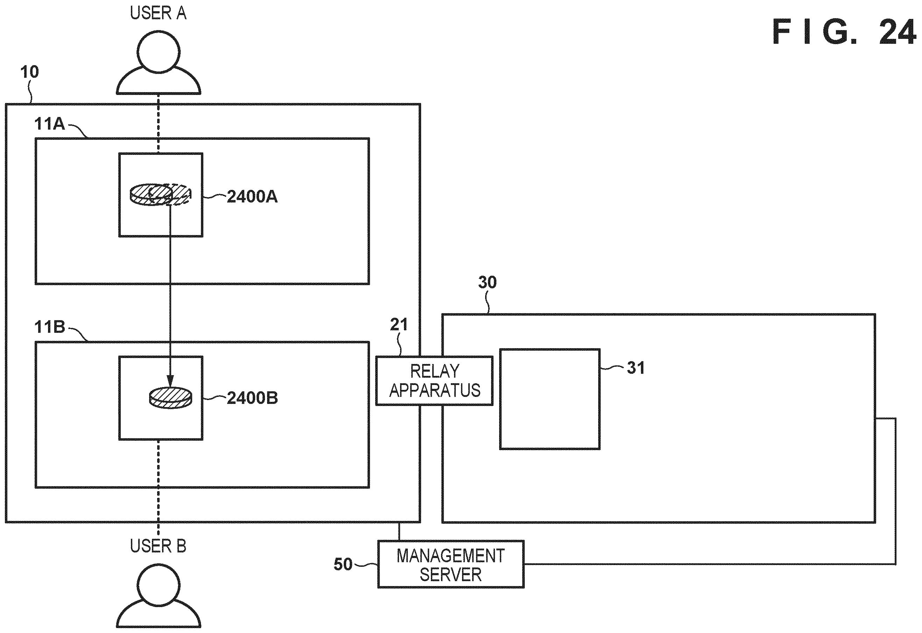

Accordingly, for example, as shown in FIG. 24, a remittance can be made from an account 2400A of the user A that is controlled by the issuing apparatus 11A corresponding to the user A, to an account 2400B of the user B that is controlled by the issuing apparatus 11B corresponding to the user B.

### Examination of Payment Processing That Uses Signature Information

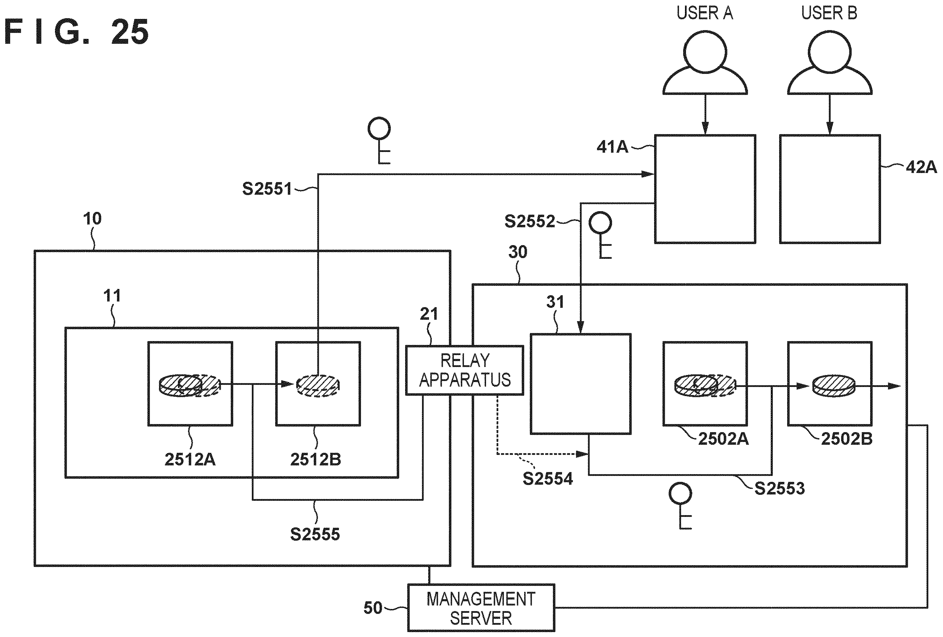

Payment processing that uses signature information according to the present embodiment will be described with reference to FIG. 25. Note that, similarly to Processing Example 1, processing that is performed when a payment is made from the user A to the user B will be described with reference to FIG. 25.

Before transmitting a payment instruction, the user apparatus 41A of the user A obtains signature information of the user A, from the issuing apparatus 11 corresponding to the user A (step S2551). In the present embodiment, a description will be given assuming that the signature information is a signature key such as an electronic seal, but the signature information may be an encryption key generated based on the account of the user A, or may be a one-time password.

The user apparatus 41A that has obtained signature information adds the signature information to an instruction to make a payment from the user A to the user B, and transmits the instruction to the management business operator apparatus 31 (step S2552). The management business operator apparatus 31 that has accepted the payment instruction transmits a token transfer instruction to the additional area network 30, using the signature information included in the accepted payment instruction (step S2553). The processing of steps S2554 and S2555 after this is similar to the processing of steps S2253 and S2254, and thus a description thereof is omitted.

Note that a configuration may be adopted in which the relay apparatus 21 transmits the signature information included in the detected token transfer instruction, to an electronic settlement agency, requests verification of the signature information, and transmits a remittance instruction to the common area network 10 using a signature key of the electronic settlement agency that is transmitted if the signature information is verified.

### Setting of Transfer Condition

A payment instruction that is transmitted by the user apparatuses 41 and 42 according to the present embodiment may include information for designating a condition related to transfer of a token. The management business operator apparatus 31 can then automatically execute the token transfer instruction based on a smart contract.

Information for designating a timing for transferring a token can be included as a smart contract, for example. Accordingly, the user apparatuses 41 and 42 can designate a remittance timing such as two week later and set a payment instruction such that a token and coins are transferred. Note that a token transfer instruction that is transmitted by the management business operator apparatus 31 is transmitted to the additional area network 30, and thus the relay apparatus 21 can transmit a remittance instruction to the common area network 10 such that coins are transferred at the remittance timing defined in the smart contract, and, in an example, the relay apparatus 21 may transmit a transfer instruction that designates a condition related to transfer of coins, based on the smart contract.

In another example, as a smart contract, information regarding a price change rate may be obtained from an external apparatus in order to change actual prices. In this case, the amount of token to be transferred may be determined by the management business operator apparatus 31. The external apparatus is the user apparatus 42A that is a payment destination, for example, and, when a seller gives a discount for an event such as a limitedtime sale, the management business operator apparatus 31 can obtain the discount rate from the user apparatus 42A, and change the amount of token instructed to be transferred, in accordance with the discount rate. Accordingly, it is possible to set a high discount rate for overstocked commercial products such that a small amount of money is remitted, and to adjust the supply-and-demand balance.

In another example, as a smart contract, in transaction of a non-fungible token (NFT), designation can be performed such that the NFT is transferred in connection with transfer of a token. In this case, the smart contract includes an identifier of the NFT, and the management business operator apparatus 31 may transmit a token transfer instruction to the additional area network 30, and transmit an instruction to transfer the NFT based on the identifier of the NFT, to an external network or the additional area network 30. Accordingly, delivery versus payment (DvP) in the NFT can be realized using the smart contract.

### Other Embodiments

The invention is not limited to the foregoing embodiments, and various variations/changes are possible within the spirit of the invention.

In the present embodiment, a token is an example of an electronic currency whose value is secured by an electronic currency. However, a token may be handled for the purpose of providing an incentive, which appears to a user to be points used for a specific service.

In addition, the present invention can be realized by processing of supplying a program that realizes one or more functions of the above embodiments, to a system or an apparatus via a network or a storage medium, and causing one or more processors in the computer of the system or the apparatus to read out and execute the program.

This application claims priority from Japanese Patent Application No. 2021-072732 filed April 22, 2021 and Japanese Patent Application No. 2021-189842 filed November 24, 2021, which are hereby incorporated by reference herein.

### REFERENCE SIGNS LIST

1: Electronic currency management system, 10: Common area network, 30: Additional area network, 11: Issuing entity apparatus, 21: Relay apparatus, 31: Management business operator apparatus, 41: Service user apparatus, 50: Management server

## Claims

1. An information processing apparatus that is managed by a management business operator that manages a token, **characterized by** comprising:
accepting means for accepting a payment instruction to transfer a coin associated with a cash currency, from a first user to a second user; and
transmitting means for transmitting a transfer instruction to transfer a token associated with the coin, to an electronic currency management system in accordance with the payment instruction accepted by the accepting means,
wherein the electronic currency management system includes:
a coin blockchain network for managing the coin,
a token blockchain network for managing a token, and
transfer means for transferring the coin associated with the token within the coin blockchain network in accordance with transfer of the token within the token blockchain network.

2. The information processing apparatus according to claim 1, **characterized in that**
the payment instruction includes signature information associated with the first user, and
the transmitting means generates and transmits an instruction to transfer the token, based on the signature information.

3. The information processing apparatus according to claim 1 or 2, **characterized in that**
the accepting means accepts the payment instruction from a first terminal of the first user.

4. The information processing apparatus according to any one of claims 1 to 3, **characterized in that**
the payment instruction from the first user to the second user is executed for a commercial product or a service that is provided from the second user to the first user,
the information processing apparatus further includes detecting means for detecting that a commercial product or a service has been provided from the second user to the first user, and
the transmitting means transmits the transfer instruction in a case where the detecting means detects that a commercial product or a service has been provided.

5. The information processing apparatus according to any one of claims 1 to 4, **characterized in that**
the transmitting means has a condition related to transfer of the token that includes a condition related to a timing for transferring the token.

6. An information processing method that is executed by an information processing apparatus that is managed by a management business operator that manages a token, **characterized by** comprising:
accepting a payment instruction to transfer a coin associated with a cash currency, from a first user to a second user; and
transmitting a transfer instruction to transfer a token associated with the coin, to an electronic currency management system in accordance with the accepted payment instruction,
wherein the electronic currency management system includes:
a coin blockchain network for managing the coin,
a token blockchain network for managing token, and
transfer means for transferring the coin associated with the token within the coin blockchain network in accordance with transfer of the token within the token blockchain network.
